Europäisches Patentamt

European Patent Office

Office européen des brevets

(11) Veröffentlichungsnummer: **0 051 086**
A1

(12) **EUROPÄISCHE PATENTANMELDUNG**

(21) Anmeldenummer: 80106815.6

(22) Anmeldetag: 05.11.80

(51) Int. Cl.³: **B 60 Q 1/30**
B 60 Q 1/44, B 62 D 37/02
B 60 N 1/06

(43) Veröffentlichungstag der Anmeldung:
12.05.82 Patentblatt 82/19

(84) Benannte Vertragsstaaten:
AT BE CH DE FR GB IT LI LU NL SE

(71) Anmelder: Koch & Overbeck Fabrikation-Export-Import
Karlstrasse 40
. D-4353 Oer-Erkenschwick(DE)

(72) Erfinder: Wiemer, Klaus, Dipl.-Ing.
Cosmarweg 42
D-1000 Berlin 20(DE)

(74) Vertreter: Herrmann-Trentepohl, Werner, Dipl.-Ing.
Schaeferstrasse 18
D-4690 Herne 1(DE)

(54) Vorrichtung zur Aufnahme von Zusatzleuchten für ein Kraftfahrzeug.

(57) Bei einer Vorrichtung zur Aufnahne zusätzlicher Leuchten an Kraftfahrzeugen sind diese zu Vermeidung von Beeinträchtigungen der Sicht oder des Fahrgastinnenraumes in außerhalb des Fahrzeugs angeordneten Trägerleisten integriert oder in innerhalb des Fahrgastraums angeordneten Funktionselementen des Fahrzeugs integriert.

Fig. 1

EP 0 051 086 A1

Croydon Printing Company Ltd.

**Dipl.-Phys. Eduard Betzler**

**Dipl.-Ing. W. Herrmann-Trentepohl**

PATENTANWÄLTE

Professional representatives
to the European Patent Office.

**0051086**

8000 München 40,
Eisenacher Straße 17

Pat.-Anw. Betzler

Fernsprecher: 089 / 36 30 11
36 30 12
36 30 13

Telegrammanschrift.
Babetzpat München
Telex 5 215 360

**4690 Herne 1,**
Schaeferstraße 18
Postfach 1140

**Pat.-Anw. Herrmann-Trentepohl**
Fernsprecher: 0 23 23 / 5 10 13
5 10 14

Telegrammanschrift:
Bahrpatente Herne
Telex 08 229 853

Ref.: A 30 512 Z/Wd
in der Antwort bitte angeben.

Zuschrift bitte nach:

H e r n e      1

4.11.1980

Koch & Overbeck, Fabrikation-Export-Import, Karlstraße 40,
4353 Oer-Erkenschwick

"Vorrichtung zur Aufnahme von Zusatzleuchten für ein
Kraftfahrzeug"

Die Erfindung betrifft eine Vorrichtung zur Aufnahme von
Zusatzleuchten für ein Kraftfahrzeug, wie insbesondere
nach rückwärts strahlende Brems-, Warn- oder Positionsleuchten.

Derartige Leuchten werden aus Sicherheitsbestrebungen
zusätzlich zu den bereits im Kraftfahrzeug fest instal-

- 2 -

Bankkonten·    Bayerische Vereinsbank München 952 287    Dresdner Bank AG Herne 7-520 499    Postscheckkonto Dortmund 558 68-467

lierten Leuchten, wie Bremsleuchten, Rückscheinwerfer u.dgl. verwendet. Als zusätzliche Leuchten kommen dabei insbesondere Bremsleuchten, aber auch sonstige Warn- und Positionsleuchten in Betracht.

Bislang werden diese zusätzlichen Leuchten im Bereich des Heckfensters durch Stangen gehalten, welche an der Hutablage montiert sind. Hierdurch wird allerdings sowohl der Fahrgastraum wie auch die Sicht nach hinten wesentlich beeinträchtigt. Ein weiterer Nachteil ist auch darin zu sehen, daß bei im Fahrgastinnenraum angeordneten Leuchten eine Rückspiegelung am Heckfenster auftritt, die insbesondere bei Nachtfahrten störend ist. Die Anbringung der Bremsleuchten mittels Saugnäpfen an der Heckscheibeninnenseite hat sich nicht bewährt, da bei den im Straßenverkehr auftretenden Stößen und daraus resultierenden Schwingungen und Vibrationen des Fahrzeuges die Saugnäpfe zusammen mit den daran befestigten Leuchten sehr leicht herunterfallen können. Dieser Nachteil kann zwar dadurch vermieden werden, daß die Leuchten an die Heckscheibe angeklebt werden, allerdings hat dies zur Folge, daß die Leuchten nur mehr schlecht abgenommen werden können, was insbesondere bei Reparaturarbeiten von Nachteil ist.

Hier will die Erfindung Abhilfe schaffen. Die Erfindung, wie sie in den Ansprüchen gekennzeichnet ist, löst die Aufgabe, eine Vorrichtung zu schaffen, welche eine einfache und weitgehende beeinträchtigungsfreie Anbringung und Unterbringung der zusätzlichen Leuchten am Fahrzeug ermöglicht.

Dadurch, daß die Leuchten in einer aerodynamisch geformten Trägerleiste integriert sind, werden die Leuchten
aus dem Fahrgastraum nach außen verlagert, so daß der
Fahrgastraum nicht länger durch die zusätzlichen Leuchten
beeinträchtigt ist. Diese Verlagerung erlaubt es auch,
die Leuchten außerhalb des Bereichs des Heckfensters anzuordnen, so daß die Sicht nach hinten durch die Leuchten
nicht gestört ist. Dadurch, daß die Leuchten in der
Trägerleiste eingebaut oder darin ausgebildet sind, kann
die Trägerleiste als Baueinheit mit den Leuchten schnell
auf dem Fahrzeug montiert werden, so daß eine Nachrüstung eines Kraftfahrzeugs auch durch fachfremde
Personen ohne weiteres möglich ist. Die Sicherheitswirkung durch die Bremsleuchten wird dadurch optimiert, daß
diese je in den Endbereichen der Trägerleiste angeordnet
sind. Dabei können die Leuchten in der Trägerleiste
erhaben oder versenkt angeordnet sein. Zweckmäßig ist
auch die Kabelzuführung in der Trägerleiste integriert,
wobei die Anbringung der Trägerleiste durch einen Steckkontakt oder ein einziges herausgeführtes Anschlußkabel
für die Leuchten noch verbessert wird. Die Teilung der
Trägerleiste quer zur Längserstreckung ermöglicht die
längenmäßige Veränderung der Trägerleiste und damit die
Anpassung ein- und derselben Trägerleiste an verschiedene Fahrzeugtypen. Die Hälften der Trägerleiste
brauchen lediglich gegeneinander verstellt und fixiert
zu werden, wonach die Baueinheit am Fahrzeug befestigt
werden kann. Zweckmäßig in diesem Zusammenhang ist auch
eine Elementierung der Trägerleiste, wobei hier die
Enden mit den darin integrierten Leuchten unverändert
gehalten und lediglich ein Zwischenstück je nach Fahrzeugtyp eingesetzt zu werden braucht. Die Verbindung der einzelnen Elemente untereinander kann durch konventionelle Weise erfolgen, etwa durch eine Einknöpfverbindung
o.dgl.

Zweckmäßigerweise ist die Trägerleiste als Spoiler, als
Windabweishaube  oder als Außenjalousie ausgebildet, in
welche dann die Leuchten integriert sind.

Zweckmäßig ist aber auch eine Unterbringung der Leuchten
in bereits von Haus aus im Fahrzeuginnenraum befindlichen
Funktionselementen des Fahrzeugs, wie etwa Kopfstützen
und Lautsprecherboxen. Auch hierdurch wird der Fahrgastinnenraum durch die zusätzliche Anbringung der Leuchten
nicht beeinträchtigt.

Eine weitere Möglichkeit besteht darin, im Bereich der
Hutablage Schwenkarme vorzusehen, an denen die Leuchten
angebracht sind. Dies erlaubt von Fall zu Fall oder in
Abhängigkeit von der Bremstätigkeit die Verschwenkung der
Leuchten in ihre Arbeitsstellung. Diese Ausbildung erlaubt
es, die Leuchten vorübergehend ohne großen Aufwand aus
ihrer Arbeitsstellung zu bringen, etwa dann, wenn auch
der Heckbereich als Stauraum für Gepäck verwendet werden
muß. Das Hochschwenken der Leuchten in ihre Arbeitsstellung bzw. das Abdecken oder Entriegeln der Leuchten durch
vorgesehene Klappen oder Lamellen kann zweckmäßigerweise
in Abhängigkeit von der Betätigung der Leuchten, etwa in
Abhängigkeit vom Bremsvorgang im Falle von Bremsleuchten
erfolgen. Eine Verzögerungsvorrichtung vermeidet, daß
bei intervallartigen Bremsen die Leuchte stets zurückschwenkt.

Besonders zweckmäßig ist die Stromdurchführung in Form einer Klammer, welche zwischen der Gummidichtung, welche die Fuge zwischen Karosserieblech und Scheibe überbrückt und der Scheibe eingesteckt ist. Diese Klemme, welche zur Erleichterung der Montage zweigeteilt sein kann, ist zweckmäßigerweise mit geeigneten Anschlußelementen für Kabel o.dgl. ausgebildet. Vorteilhafterweise können diese stromführenden Klammern auch zur Halterung der Trägerleisten herangezogen werden. Eine gesonderte Befestigung der Trägerleiste kann dann entfallen.

Im folgenden wird die Erfindung anhand von Ausführungsbeispielen in der Zeichnung näher erläutert. Es zeigen

Fig. 1   eine schematische Ansicht des Hecks eines Fahrzeugs mit daran angeordneter Trägerleiste,

Fig. 2   ein Detail der Trägerleiste mit integrierter Leuchte,

Fig. 3   eine Draufsicht auf den in Fig. 2 dargestellten Gegenstand,

Fig. 4   eine schematische Darstellung des Hecks eines Fahrzeugs mit daran angeordneter Trägerleiste,

Fig. 5   eine Draufsicht auf das in Fig. 4 dargestellte Fahrzeug,

Fig. 6   eine weitere Ausführungsform der Erfindung,

Fig. 7 den Querschnitt durch eine stromführende Klammer im Bereich einer Fuge zwischen Karosserieblech und Scheibe,

Fig. 8 eine weitere Ausführungsform einer stromübertragenden Klammer,

Fig. 9 eine schematische Ansicht einer in einer Kopfstütze integrierten Leuchte,

Fig. 10 eine Einzelheit aus Fig. 9,

Fig. 11 eine in einer Kopfstütze integrierte Leuchte,

Fig. 12 eine weitere Ausführungsform des in Fig. 9 dargestellten Gegenstands,

Fig. 13 eine weitere Ausführungsform der Erfindung im Bereich der Hutablage eines Fahrzeugs,

Fig. 14 eine weitere Ausführungsform des in Fig. 13 dargestellten Gegenstands, sowie

Fig. 15 eine Anordnung der Leuchte in einem Lautsprecher.

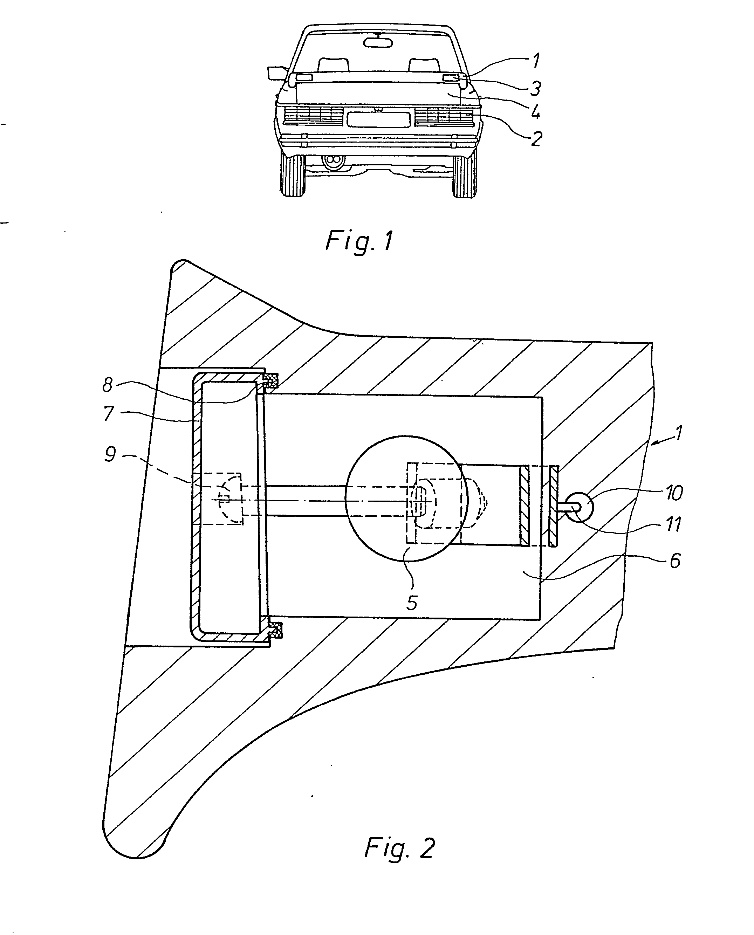

Gemäß Fig. 1, in welcher das Heck eines Kraftfahrzeugs dargestellt ist, ist die Trägerleiste 1 zur Aufnahme der zusätzlich zu den bereits im Fahrzeug integrierten Rückleuchten 2 vorgesehenen Rückleuchten 3 als Spoiler ausgebildet. Der Spoiler dient in üblicher Weise zur Vergrösserung der Bodenhaftung des Fahrzeugs und Vergrößerung der Seitenstabilität insbesondere bei sehr hohen Fahrgeschwindigkeiten. Beim dargestellten Ausführungsbeispiel ist der Spoiler bzw. die Trägerleiste 1 am hinteren Ende des Kofferraumdeckels 4 angeordnet. Zweckmäßigerweise erstreckt sich die Trägerleiste 1 über im wesentlichen die gesamte Breite des Kofferraumdeckels 4. Allerdings kann die Trägerleiste 1 auch unterteilt sein, um insbesondere ein im Mittenbereich des Kofferraumdeckels angebrachtes Schloß zum Verriegeln und Entriegeln des Kofferraumdeckels freizulassen.

Die Trägerleiste 1, die auch an anderen Stellen am Heck des Fahrzeugs, etwa an der Dachleiste angebracht sein kann, ist zweckmäßigerweise mit der Karosserie des Fahrzeugs verklebt, verschraubt oder wird über Magnete daran gehaltert. Die Trägerleiste besteht insbesondere aus Kunststoff. Zweckmäßig ist auch eine Trägerleiste aus Leichtmetall, die in Verbund mit Gummi oder Kunststoff aufgebaut ist.

Die Leuchten 3, die im Spoiler integriert sind, befinden sich insbesondere im Bereich der Enden des Spoilers. Aus Fig. 2 geht hervor, daß hierzu im Spoiler eine Öffnung oder Aussparung geformt ist, innerhalb welcher die Lampe 5 der Leuchte einschließlich der zugehörigen Kontaktelemente angeordnet ist. Die Öffnung oder das vordere Ende der Aussparung 6 ist durch ein Scheinwerferglas 7 abgedeckt, wobei zwischen dem Scheinwerferglas 7 und dem Spoiler eine Gummidichtung 8 vorgesehen ist. Das Scheinwerferglas 7 ist über Schrauben 9 am Spoiler befestigt, wobei an diesen Schrauben 9 auch weitere Kontaktelemente der Leuchte befestigt bzw. gehaltert sein können.

Zweckmäßigerweise kann die Leuchte auch als Baueinheit in die in den Spoiler geformte Aussparung 6 eingesetzt werden. Zu diesem Zweck ist die Aussparung 6 von den Gesamtabmessungen her etwas kleiner als die Baueinheit der Leuchte, so daß die Leuchte nach dem Einsetzen in die Aussparung 6 durch Klemmdruck gehaltert ist. Die Kabelzuführung an die Leuchten kann außen am Spoiler befestigt sein. Zweckmäßig ist jedoch die Kabelzuführung zu den Leitungen im Spoiler integriert, wobei hierzu Kanäle 10 oder Aussparungen im Spoiler vorgesehen sein können. Diese Kanäle 10 oder Aussparungen in Form von Rinnen o.dgl. werden bereits mit Formung des Spoilers hergestellt, so daß diese nicht nachträglich vorgesehen werden müssen. Die Kabelzuführungen 11 zu den einzelnen Leuchten werden an einem an der Trägerleiste 1 ausgebildeten Steckkontakt, der nicht näher dargestellt ist, oder an einem aus der Trägerleiste herausgeführten Anschlußkabel zusammengefaßt.

Somit kann die Trägerleiste 1 bzw. der Spoiler als Baueinheit zusammen mit den Leuchten angeboten werden. Dabei sind nicht nur die Leuchten durch die Kammerung oder Einbettung innerhalb der Aussparung 6, sondern auch die Kabelzuführungen durch die Kanäle 10 oder Aussparungen vor Beschädigungen oder Verschmutzungen geschützt. Die Trägerliste kann dann als Baueinheit am Fahrzeugäußeren befestigt werden.

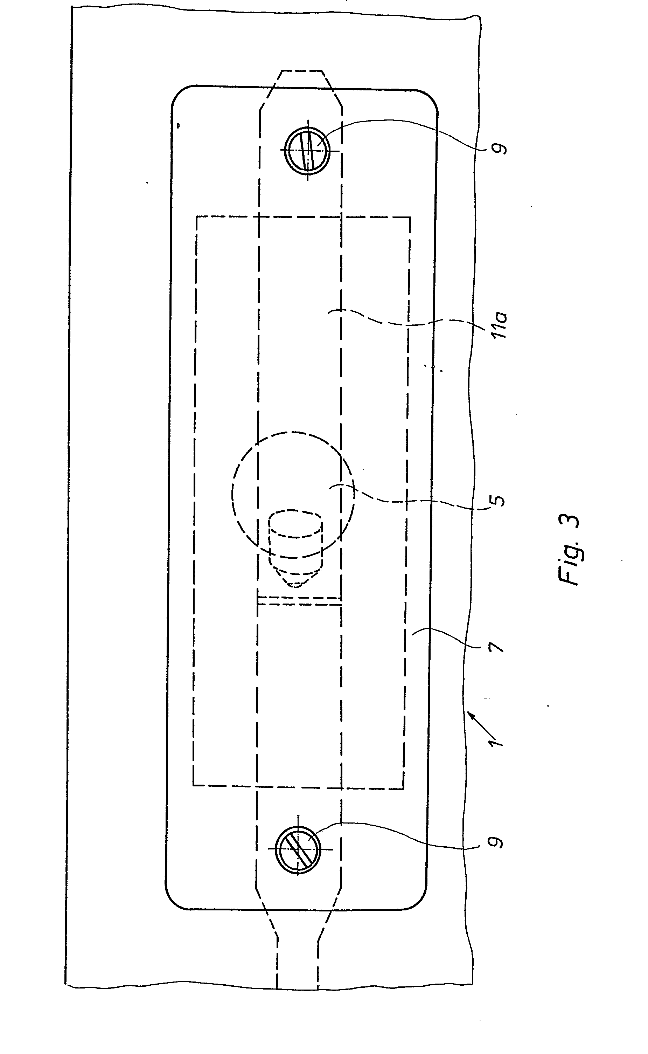

In Fig. 3 ist die aus Fig .2 ersichtliche Leuchte in Draufsicht dargestellt und es geht hervor, daß die Leuchte am Ende des Spoilers in diesen eingebettet und durch zwei Schrauben 9 gehaltert ist. An den Schrauben 9 ist auch die

Kontaktschiene 1h für die Lampe gehaltert.

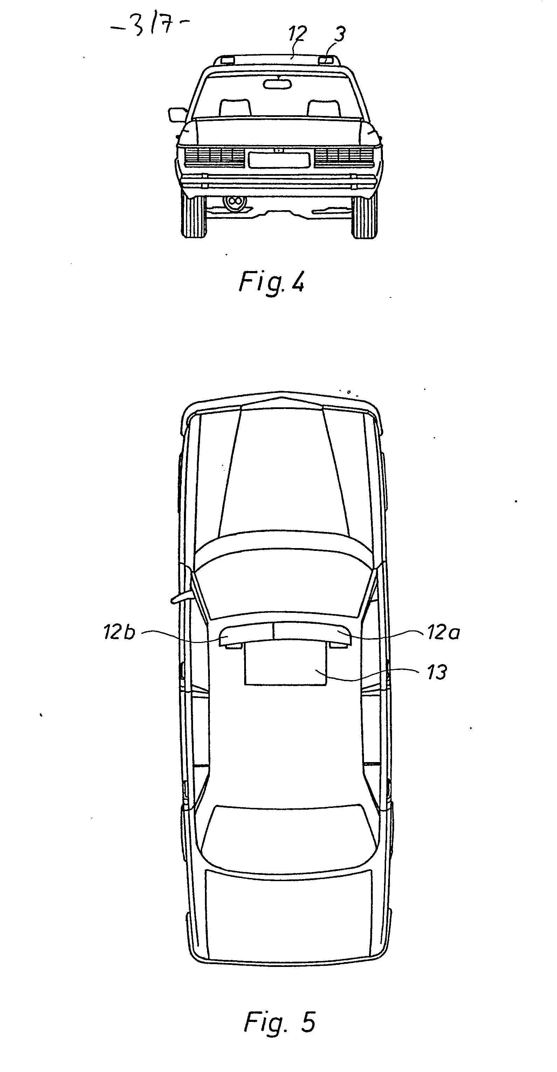

Eine weitere vorteilhafte Ausführungsform ist in den Fig. 4 und 5 dargestellt. In dieser Ausführungsform sind die Rückleuchten 3 in eine Windabweiserhaube 12 integriert, welche auf dem Fahrzeugdach vor einem Schiebedach angeordnet ist. Die Windabweiserhaube 12 wölbt sich teilweise über das Schiebedach 13, wobei unterhalb der Haube 12 die Leuchten 3 angeordnet sind. Hierdurch sind die Leuchten teilweise durch die Haube 12 nach außen abgedeckt, so daß die Leuchten aerodynamisch günstig verkleidet sind. Zweckmäßigerweise sind die Leuchten 3 an der Haube 12 aufgehängt. Jedoch kann an der Unterseite der Leuchte 3 auch eine Gummizwischenlage vorgesehen sein, so daß die Leuchte fest zwischen Haube 12 und Dach des Fahrzeugs verspannt ist. Die Gummizwischenlage, die zeichnerisch nicht festgehalten ist,dient als Geräuschdämpfung, so daß infolge der Auflage der Leuchte 3 keine Störgeräusche während des Fahrens hervorgerufen werden können.

Zweckmäßigerweise ist, wie aus Fig. 5 hervorgeht, die Haube 12 quer zur Längserstreckung der Haube in zwei Hälften 12a, 12b geteilt , so daß sich die Länge der Windabweiserhaube 12 entsprechend des verwendeten Fahrzeugstyps einstellen läßt. Somit kann ein- und dieselbe Windabweiserhaube 12 für verschiedene Fahrzeuge verwendet werden. Zweckmäßigerweise sind im Überlappungsbereich der beiden Haubenhälften 12a, 12b Langlöcher vorgesehen, so daß die einzelnen Haubenhälften nach Einstellung der Haube mittels Schrauben o.dgl. in der Einstellposition fixiert werden können. Zweckmäßig ist es in diesem Zusammenhang, daß die Windabweiserhaube flexibel ausgebildet ist. Im übrigen kann die Windabweiserhaube 12 in konventioneller Weise mit dem Fahrzeugdach befestigt sein.

Für die stromführenden Kabel sind zweckmäßigerweise in der Windabweiserhaube Kanäle vorgesehen oder die Stromleitung erfolgt durch entsprechend gedruckte Stromleiter in der Windschutzhaube 12.

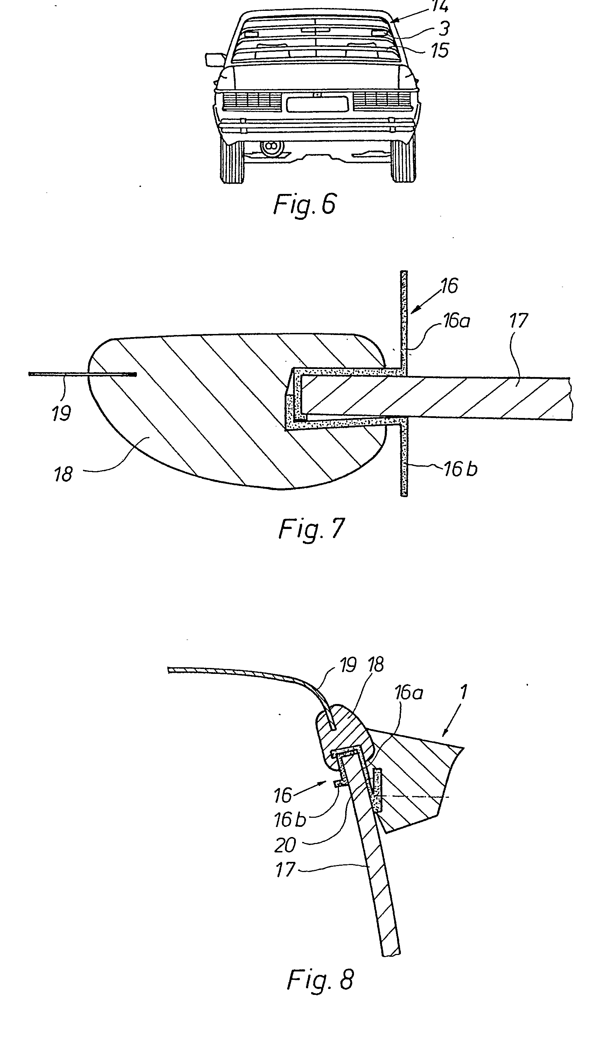

Bei dem aus Fig. 6 ersichtlichen Ausführungsbeispiel sind die Leuchten in sogenannten Außenjalousien integriert, welche zum Schutz gegen Sonneneinstrahlung am Heckfenster eines Fahrzeugs angeordnet sind. Eine der Außenjalousie 14 besteht üblicherweise aus mehreren übereinander angeordneten Schirmleisten 15, die zwischen sich einen Sehschlitz bilden. Zweckmäßigerweise sind die Leuchten 3 im Bereich solcher Sehschlitze, also zwischen zwei benachbarten Schirmleisten 15 angeordnet. Die Rückleuchten 3 können mit den Schirmleisten 15 verklebt oder verschraubt sein. Zweckmäßig ist es auch, eine derartige Schirmleiste 15 mit Sicken auszubilden, wobei die Leuchten 3 dann in den entsprechend geformten Sicken aufgenommen und gehaltert sind. Hierdurch werden die Leuchten 3 zumindest teilweise gekammert, so daß sie zum einen geschützt sind und zum anderen sich günstig in die aerodynamische Bauweise einer solchen Außenjalousie eingliedern. Um die Sicht durch die Heckscheibe möglichst wenig zu beeinträchtigen, sind die Rückleuchten 3, wie aus der rechten Darstellung aus Fig. 6 hervorgeht, außerhalb der Heckscheibe in die Außenjalousie 14 integriert. Je nach Stärke der Schirmleisten 15 können in diese auch Aussparungen ausgebildet sein, in denen die rückleuchten 3 versenkt aufgenommen sind. Dies bewirkt, daß die Rückleuchten nicht von der Außenjalousie vorstehen und bei Kollisionen die Verletzungsgefahr erhöhen. Zweckmäßig ist es auch, daß die Jalousien zur nachträglichen Aufnahme von Rückleuchten mit herausnehmbaren Paßstücken, Steckkontakten bzw. Zuleitungen, die gegebenenfalls aufgedruckt sein können, versehen sind. Dies erlaubt die einfache Nachrüstung solcher Jalousien mit den verschiedensten Rückleuchten.

Um für das Verlegen der Zuführkabel zu den Leuchten an der Trägerleiste das Bohren von Löchern in Karosserieteile zu vermeiden, die aufwendig abgedichtet werden müssen, dient die in Fig. 7 näher dargestellte Ausgestaltung. Dabei sind Klammern 16 vorgesehen, welche zwischen Scheibe 17 und die diese Scheibe einfassende Gummidichtung 18 gesteckt sind. Die Gummidichtung 18 ist ihrerseits am Karosserieblech 19 angeschlossen und überbrückt die Fuge zwischen der Scheibe 17 und dem Karosserieblech 19. Die Stromführung erfolgt durch die Klammer 16, wobei hierzu zweckmäßigerweise in der Klammer 16 stromführende Kontaktstreifen oder -drähte integriert sind. Diese Kontaktstreifen oder -drähte sind der Übersichtlichkeit halber nicht zeichnerisch dargestellt. Die eingesteckten Klammern 16, an denen die Zuführkabel zu den Trägerleisten und an der anderen Seite fortführende Verbindungskabel angeschlossen sind, werden durch die elastische Gummidichtung 18 fest in ihrer Lage gehalten, wobei die Gummidichtung 18 auch den Bereich um die Klammern 16 abdichtet, so daß keinerlei besondere Dichtungsmaßnahmen bei dieser Ausgestaltung zutreffend sind.

Zweckmäßigerweise sind die Klammern 16 je in zwei Klammernteile gegliedert, die von beiden Seiten der Scheibe her in den Zwischenraum zwischen Karosserieblech 19 und Scheibe 17 gesteckt werden. Hierdurch wird die Montage der Klammer 16 erleichtert. Die beiden Klammernteile 16a und 16b einer Klammer 16 sind in Fig. 7 näher dargestellt. Die eingesteckten Klammernteile 16a, 16b überdecken sich teilweise, so daß zwischen beiden Klammerteilen ein Kontakt gewährleistet ist. Infolge der Pressung über die Gummidichtung 18 ist dieser Kontakt auch dauerhaft. In gleicher Weise wie bei einer einteiligen Klammer sind bei einer zweiteiligen Klammer Kontaktstreifen oder -drähte integriert, die bis auf die Kontaktfläche ab isoliert sind. Zweckmäßigerweise sind die Kontaktstreifen oder -drähte im Bereich der Kontaktfläche an einer Kontaktschiene zusammengeführt, so daß es auf eine genaue Ausrichtung der beiden Klammerteile 16a und 16b beim Zusammenstecken nicht ankommt.

Aus Fig. 8 ist ersichtlich, daß der eine Klammerteil 16a den anderen Klammerteil 16b innerhalb einer Schnappverbindung übergreift, wodurch die Verankerung der Klammer innerhalb des Spalts zwischen Karosserieblech 19 und der Scheibe 17 noch vergrößert wird. Die in Fig. 8 dargestellte Klammer 16 dient zugleich zur Aufnahme und Halterung einer Trägerleiste 1, in welche Rückleuchten integriert sind. Zweckmäßigerweise ist die Trägerleiste, welche in Fig. 8 als Spoiler dargestellt ist, mit der Klammer 16 verschraubt oder verklebt. Zugleich kann ein Formschluß vorgesehen sein, wobei hierzu ein Ende der Klammer 16 gefalzt ist, so daß eine Hinterschneidung 20 gebildet ist, in welche die Tragleiste 1 mit einem daran ausgebildeten Fortsatz greift. Hierdurch kann die Stromdurchführung auch sehr gut als Halterung für die Tragleiste herangezogen werden, so daß zusätzliche Befestigungsmaßnahmen nicht erforderlich sind.

Schließlich sind die Enden der Klammern 16 so ausgebildet, daß die Kabelzuführungen daran angeschlossen werden können. D.h., die Klammerenden sind als Kabelschuhe oder sonstige Anschlußelemente geformt.

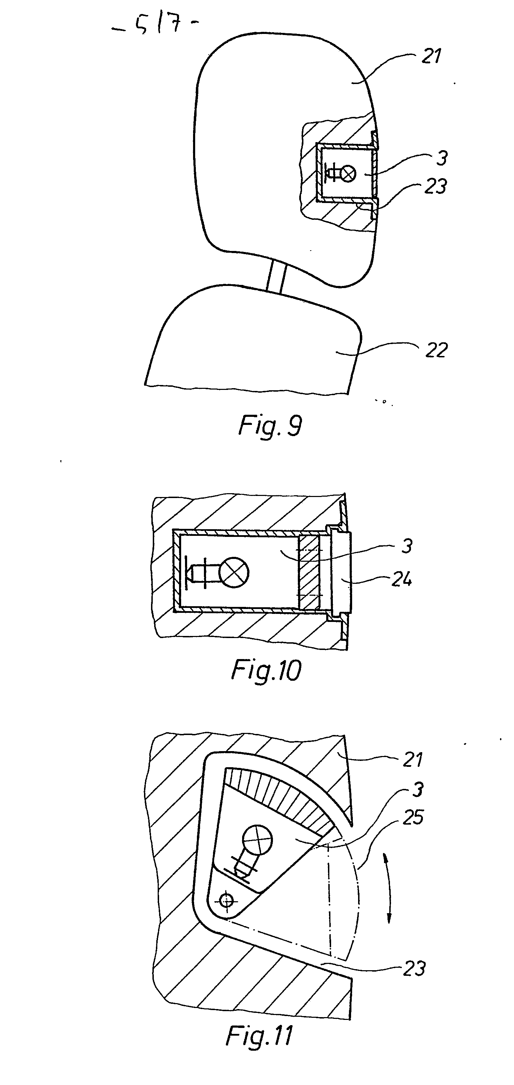

Bei den in den Fig. 9 bis 15 dargestellten Ausführungsbeispielen sind die Rückleuchten, insbesondere Bremsleuchten, unmittelbar in Funktionselemente des Fahrzeugs selbst integriert, so daß eine Beeinträchtigung oder Verringerung des Fahrgastinnenraums oder der Sicht nach hinten durch die Heckscheibe infolge der zusätzlich vorgesehenen Leuchten weitgehend ausgeschlossen ist.

Aus Fig. 9 geht hervor, daß die Leuchte 3 in der Rückseite einer Kopfstütze 21 integriert ist, welche auf einem Sitz 22 befestigt ist. Hierzu ist in der Kopfstütze 21 eine Aussparung 23 vorgesehen, in welche die Rückleuchte als Baueinheit eingesetzt und befestigt ist.

Diese in einer Kopfstütze einer Rücklehne integrierte Leuchte ist in Fig. 10 noch näher dargestellt, wobei hieraus eine Kappe 24 ersichtlich ist, welche die Öffnung der Aussparung 23 nach außen hin abschließt. Beim Betätigen der Leuchte, etwa infolge eines Bremsvorganges, wird die Kappe von der Öffnung weg bewegt, wobei diese Steuerung durch konventionelle Schaltkreise erfolgt. Die Kappe 24 kann vor der Öffnung schwenkbar gelagert sein, so daß sie von der Öffnung der Aussparung 23 weggeklappt werden kann. Möglich ist auch eine Führung der Kappe auf nicht näher dargestellten Leitschienen, so daß die Kappe zur Seite hin von der Öffnung wegbewegt werden kann und hiermit die Leuchte 3 freigibt. Selbstverständlich können zum Freigeben der Öffnung auch andere Mechanismen verwendet werden, wie etwa Magnethalterung, Federverankerung u.dgl., soweit diese geeignet sind.

Zweckmäßigerweise ist die Kappe 24 aus dem gleichen Material wie die Kopfstütze 21 hergestellt, so daß bei geschlossener Kappe 24 ein abgerundetes und einheitliches Gesamtbild der Kopfstütze 21 gewährleistet ist.

Gemäß Fig. 11 ist die Rückleuchte in einer Aussparung 23 der Kopfstütze 21 schwenkbar gelagert, so daß die Rückleuchte erst bei Betätigung der Bremse vor die Öffnung 25 der Aussparung geschwenkt wird. Eine Verriegelung der Rückleuchte in verschiedenen Stellungen ist möglich.

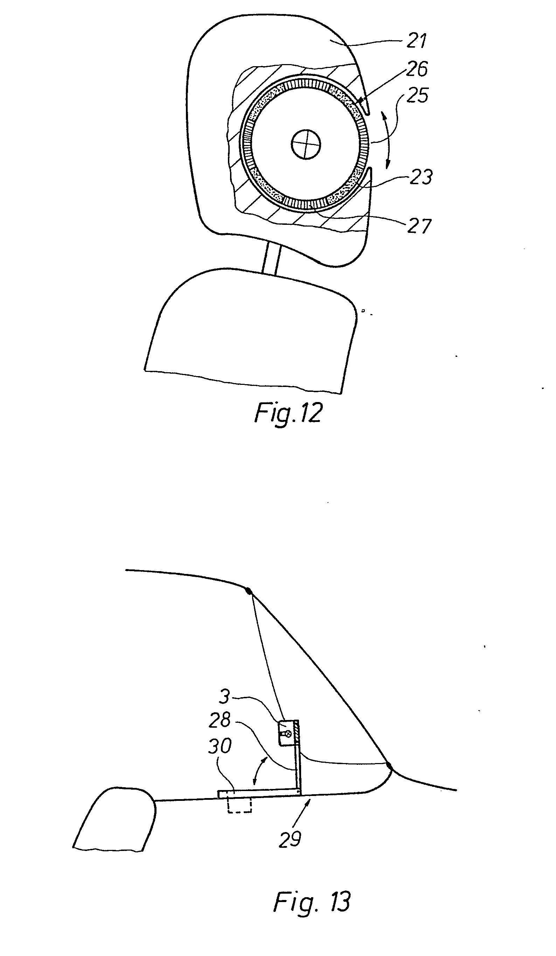

Gemäß Fig. 12 ist in der Aussparung 23 der Kopfstütze 21 ein Hohlkörper 26 drehbar gelagert, innerhalb dem sich die Lampe der Leuchte befindet. Der Hohlkörper ist mit mehreren durch Scheinwerferglas abgedeckten Fenstern 27 ausgerüstet, wobei je nach Stellung des Hohlkörpers 26 die Öffnung 25 der Aussparung 23 verschlossen oder durch ein Fenster 27 abgedeckt ist. Selbstverständlich ist die Stellung des Hohlkörpers 26 von der Betätigung der Leuchten abhängig, d.h. im Falle eines Bremsvorganges wird ein Fenster 27 vor die Öffnung 25 gedreht. Im übrigen ist der Hohlkörper mit demselben Material ausgebildet wie die Kopfstütze 21.

Bei der in Fig. 13 dargestellten Ausführungsform ist ein Schwenkarm 28 im Bereich der Hutablage 29 vorgesehen, welcher an einem an der Hutablage 29 befestigten Stützfuß 30 angelenkt ist. Am Schwenkarm 28 ist eine Leuchte 3 ausgebildet oder angeordnet. Diese Ausgestaltung erlaubt es, den Heckbereich des Fahrzeugs trotz zusätzlicher Rückleuchten als Stauraum zu verwenden, wozu lediglich die Schwenkarme 28 eingeschwenkt werden müssen. Ansonsten können die Schwenkarme 28 ausgefahren und die zusätzlichen Rückleuchten zur Sicherheit verwendet werden. Zweckmäßigerweise ist der Stützfuß 30 mit einer Öffnung versehen, in welche die Leuchte 3 mitsamt dem Schwenkarm 28 versenkbar ist. Bei dieser Ausgestaltung ist es möglich, die Schwenkung manuell vorzunehmen, d.h. die Schwenkarme 28 hochzuklappen, falls auf das Vorhandensein der zusätzlichen Leuchten Wert gelegt wird. Andererseits ist es auch möglich, den Schwenkarm 28 in Abhängigkeit von der Betätigung der Rückleuchte in die Betriebsstellung auszuschwenken, wobei dies mittels üblicher Schaltkreise und konventioneller Bauelemente erfolgt. Letztere Möglichkeit ist insbesondere dann zweckmäßig, wenn es sich um ein Fahrzeug mit einem kleinen Heckfenster handelt, bei dem eine Beeinträchtigung der Sicht nach hinten nur in bestimmten Fällen, etwa beim Bremsvorgang, in Kauf genommen wird. Zweckmäßig ist es dabei, eine Verzögerungsvorrichtung einzubauen, so daß bei einem Intervallbremsen ein wiederholtes Zurückklappen und Vorklappen der Rückleuchten verhindert wird.

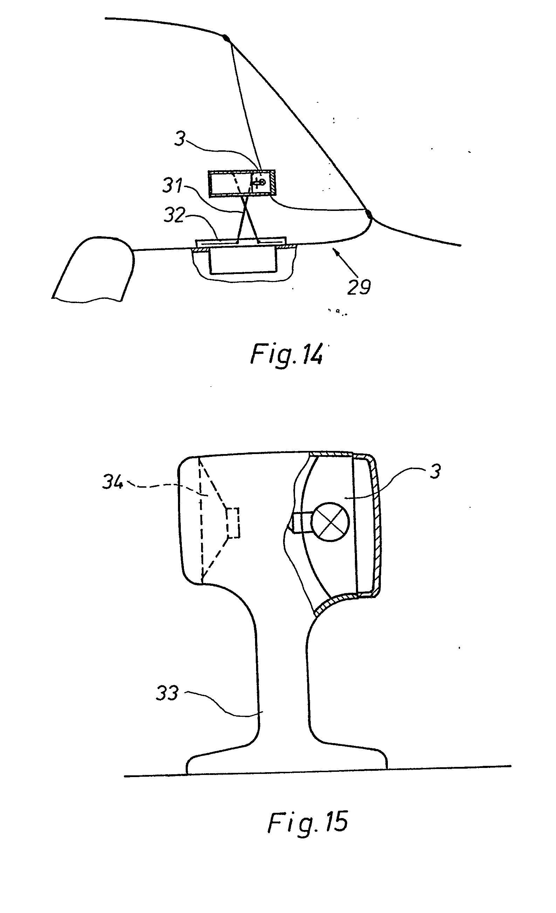

Bei dem in Fig. 14 dargestellten Ausführungsbeispiel ist ein Scherengitter 31 zwischen Leuchte und Hutablage 29 vorgesehen. Auch hier ist es möglich, das Scherengitter und damit die Leuchte 3 dann einzufahren, wenn der Heckbereich als Stauraum verwendet werden soll. Gleichermassen ist es möglich, die Leuchte 3 über das Scherengitter 31 in Abhängigkeit von der Betätigung, also etwa beim Bremsvorgang auszufahren. Zweckmäßig ist es auch hier, das Scherengitter 31 auf einem Stützfuß 32 zu verankern, der eine durch strichlierte Linie dargestellte Vertiefung aufweist, in welche die Leuchte 3 versenkbar ist.

Eine weitere Möglichkeit der Unterbringung der Leuchte 3 in Funktionselemente innerhalb des Fahrgastinnenraums besteht darin, die Leuchte 3 in die Rückseite einer Lautsprecherbox 33 zu integrieren. Derartige Lautsprecherboxen 33 sind üblicherweise im Bereich der Hutablage angeordnet, wobei der Lautsprecher 34 nach vorne und die Rückseite mit der integrierten Leuchte 3 nach hinten in Richtung des Heckfensters weist.

Schließlich ist es vorteilhaft, die Bremsleuchten seitlich durch ein Schutzgitter abzudecken, so daß die Bremsleuchten lediglich von hinten sichtbar sind. Hierdurch werden Störungen beim Aufleuchten der Bremsleuchten ausgeschlossen. Anstelle einer Kappe zum Verschließen der Scheinwerferfläche der Leuchten 3 können auch Lamellen verwendet werden, die schwenkbar aufgehängt sind und bei Betätigung der Leuchte die Scheinwerferfläche freigeben.

Patentansprüche:

1. Vorrichtung zur Aufnahme von Zusatzleuchten für ein Kraftfahrzeug, wie insbesondere nach rückwärts strahlenden Brems-, Warn- oder Positionsleuchten, d a d u r c h   g e k e n n z e i c h n e t , daß eine oder mehrere Leuchten (3) in einer aerodynamisch geformten Trägerleiste (1) integriert sind, welche außerhalb des Fahrzeuginnenraums am Fahrzeug angeordnet ist.

2. Vorrichtung nach Anspruch 1 , d a d u r c h   g e k e n n z e i c h n e t , daß in der Trägerleiste (1) zwei Leuchten (3) eingebaut sind, von denen jede an einem Ende der Trägerleiste (1) angeordnet ist.

3. Vorrichtung nach Anspruch 1 oder 2 , d a d u r c h   g e k e n n z e i c h n e t , daß jede Leuchte (3) in der Trägerleiste erhaben oder in einer Aussparung (6, 23) versenkt angeordnet ist.

4. Vorrichtung nach einem der Ansprüche 1 bis 3, d a d u r c h   g e k e n n z e i c h n e t , daß die Kabelzuführungen zu den Leuchten in der Trägerleiste (1) integriert und an einem an der Trägerleiste ausgebildeten Steckkontakt oder aus der Trägerleiste herausgeführten Anschlußkabel zusammengeführt sind.

5. Vorrichtung nach einem der vorhergehenden Ansprüche, d a d u r c h g e k e n n z e i c h n e t , daß die Trägerleiste (1) im wesentlichen quer zur Längserstreckung geteilt ist und die Teile (12a, 12b) der Leiste zur Einstellung der Länge der Trägerleiste relativ zueinander verschiebbar sind oder die Trägerleiste (1) elementiert ist, derart, daß die Länge der Trägerleiste durch Zugabe bzw. Wegnahme von Elementen veränderbar ist.

6. Vorrichtung nach einem der vorhergehenden Ansprüche, d a d u r c h g e k e n n z e i c h n e t , daß die Trägerleiste (1) ein Spoiler ist.

7. Vorrichtung nach einem der Ansprüche 1 bis 5, d a d u r c h g e k e n n z e i c h n e t , daß die Trägerleiste (1) durch eine vor dem Schiebedach eines Kraftfahrzeugs angeordnete Windabweishaube (12) gebildet ist, an deren Enden unterhalb der Haube je eine Leuchte (3) aufgenommen ist.

8. Vorrichtung nach einem der Ansprüche 1 bis 5, d a d u r c h g e k e n n z e i c h n e t , daß die Trägerleiste (1) durch eine an das Heckfenster anordbare Außenjalousie, bestehend aus mehreren Schirmleisten (15) gebildet ist.

9. Vorrichtung nach Anspruch 8, d a d u r c h g e k e n n z e i c h n e t , daß die Leuchten (3) je zwischen zwei einen Sehschlitz begrenzenden Schirmleisten (15) befestigt sind.

10. Vorrichtung nach Anspruch 9 ,
d a d u r c h      g e k e n n z e i c h n e t ,
daß die Leuchten (3) an seitlichen Enden der
Schirmleisten angeordnet sind, die seitlich über
das Heckfenster vorstehen.

11. Vorrichtung nach einem der vorhergehenden Ansprüche,
d a d u r c h      g e k e n n z e i c h n e t ,
daß die Kabelzuführung von der Trägerleiste (1) in
das Fahrzeuginnere durch Klammern (16) erfolgt, welche zwischen Scheibe (17) und die Scheibe einfassenden Gummidichtung (18) gesteckt sind.

12. Vorrichtung nach Anspruch 11 ,
d a d u r c h      g e k e n n z e i c h n e t ,
daß die Klammern (16) zweigeteilt (16a, 16b) sind
und jeder Teil von einer anderen Seite des Fensterrands zwischen Scheibe und Gummidichtung (18) gesteckt ist, wobei sich die beiden Klammerteile
(16a, 16b) teilweise überdecken.

13. Vorrichtung nach Anspruch 12,
d a d u r c h      g e k e n n z e i c h n e t ,
daß in die Klammerteile (16a, 16b) nach außen
isolierte stromleitende Kontaktstreifen oder -drähte
integriert sind, welche im Bereich der Berührungsfläche beider Klammerteile frei von Isolierung sind.

14. Vorrichtung nach einem der Ansprüche 11 bis 13,
d a d u r c h      g e k e n n z e i c h n e t ,
daß die Enden der Klammern (16) als Anschlußelemente
für stromführende Kabel ausgebildet sind.

15. Vorrichtung nach einem der Ansprüche 11 bis 14, d a d u r c h    g e k e n n z e i c h n e t , daß die Trägerleiste (1) an den Stromübertragungsklammern (16) angeschlossen und gehaltert ist.

16. Vorrichtung zur Aufnahme von Zusatzleuchten für ein Kraftfahrzeug, wie insbesondere nach rückwärts strahlenden Brems-, Warn- oder Positionsleuchten, d a d u r c h    g e k e n n z e i c h n e t , daß die Leuchten (3) in im Fahrzeuginnenraum befindlichen Funktionselementen des Fahrzeugs selbst integriert sind.

17. Vorrichtung nach Anspruch 16, d a d u r c h    g e k e n n z e i c h n e t , daß die Leuchten in Aussparungen (23) an der Rückseite von Kopfstützen (21) versenkt oder erhaben aufgenommen sind.

18. Vorrichtung nach Anspruch 17, d a d u r c h    g e k e n n z e i c h n e t , daß die Leuchten (3) innerhalb der Aussparung (23) drehbar gelagert und in die Funktionsstellung vor die Öffnung (25) der Aussparung drehbar bzw. verschwenkbar sind.

19. Vorrichtung nach einem der Ansprüche 16 bis 18, d a d u r c h    g e k e n n z e i c h n e t , daß die Leuchten (3) aus einem drehbar gelagerten Hohlkörper (26) mit mehreren segmentartigen Fenstern (27) besteht, so daß je nach Stellung des Hohlkörpers vor der Öffnung (25 der Aussparung (23) die Strahlenbahn für die Leuchte offen oder geschlossen ist.

20. Vorrichtung nach Anspruch 16,
    d a d u r c h   g e k e n n z e i c h n e t ,
    daß die Leuchte an im Bereich der Hutablage angeordneten Schwenkarmen (28) angebracht sind, durch
    welche die Leuchten in ihre Betriebsstellung hochklappbar sind.

21. Vorrichtung nach Anspruch 20 ,
    d a d u r c h   g e k e n n z e i c h n e t ,
    daß der Befestigungsfuß (30) des Schwenkarms (28)
    eine Öffnung aufweist, in welcher die Leuchte (3)
    in eingeschwenkter Stellung des Schwenkarms gegebenenfalls mit diesem versenkt ist.

22. Vorrichtung nach Anspruch 16,
    d a d u r c h   g e k e n n z e i c h n e t ,
    daß die Leuchte an einem im Bereich der Hutablage
    (29) angeordneten Scherengitter (31) angeordnet ist,
    mittels dem die Leuchte (3) in Betriebsstellung
    bewegbar ist.

23. Vorrichtung nach Anspruch 16 ,
    d a d u r c h   g e k e n n z e i c h n e t ,
    daß die Leuchten in der Rückseite von Lautsprecherboxen (33) versenkt oder erhaben integriert sind.

24. Vorrichtung nach einem der Ansprüche 16 bis 23,
    d a d u r c h   g e k e n n z e i c h n e t ,
    daß die in die Funktionselemente integrierten
    Leuchten(3) durch Kappen (24) oder schwenkbare

- 6 -

Lamellen verschließbar sind.

25. Vorrichtung nach Anspruch 24 ,
   d a d u r c h   g e k e n n z e i c h n e t ,
   daß das Öffnen und Schließen der Kappen (24) bzw.
   Lamellen in Abhängigkeit von der Betätigung der
   Leuchten (3) erfolgt.

26. Vorrichtung nach einem der Ansprüche 16 bis 25,
   d a d u r c h   g e k e n n z e i c h n e t ,
   daß bei beweglichen Leuchten die Lampe über einen
   Schalter oder Berührungskontakt erst zugeschaltet
   wird, wenn die Leuchte ihre Betriebsstellung eingenommen hat in diese verriegelt ist.

Fig. 1

Fig. 2

0051086

Fig. 3

-3/7-

Fig. 4

Fig. 5

A 20 512

— 417 —

Fig. 6

Fig. 7

Fig. 8

- 517 -

Fig. 9

Fig.10

Fig.11

Fig.12

Fig. 13

Fig.14

Fig.15

0051086

Nummer der Anmeldung

EP 80 10 6815

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 021 053 (HONDA GIKEN KOGYO K.K.)<br>* Figuren 1-3 * | 1,10 |
| | US - A - 2 955 872 (BARENYI)<br>* Figuren 1-3 * | 1-3 |
| | US - A - 3 791 468 (BRYAN)<br>* Figur 1 * | 1-3 |
| | US - A - 3 436 758 (KLUTH)<br>* Figuren 1-4 * | 1-3,6, 7,16, 18,19 |
| | US - A - 2 473 187 (ZELK)<br>* Figur 2 * | 20,21 |
| | US - A - 3 479 982 (HONCHARENKO)<br>* Figur 1 * | 24,25 |

**KLASSIFIKATION DER ANMELDUNG** (Int. Cl.³)

B 60 Q 1/30
            1/44
B 62 D 37/02
B 60 N 1/06

**RECHERCHIERTE SACHGEBIETE** (Int. Cl.³)

B 62 D 37/00
            37/02
B 60 N 1/061
B 60 Q 1/44
            1/30
            1/26
            1/50

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-06-1981 | ONILLON |

EPA form 1503.1  06.78